Europäisches Patentamt

European Patent Office

Office européen des brevets

(11) Veröffentlichungsnummer: **0 353 747**

**A2**

## (12) EUROPÄISCHE PATENTANMELDUNG

(21) Anmeldenummer: 89114326.5

(22) Anmeldetag: 03.08.89

(51) Int. Cl.⁴: **G01N 1/12**

(30) Priorität: 04.08.88 DE 3826455

(43) Veröffentlichungstag der Anmeldung:
07.02.90 Patentblatt 90/06

(84) Benannte Vertragsstaaten:
BE CH DE LI NL SE

(71) Anmelder: **Kernforschungsanlage Jülich GmbH**
**Wilhelm-Jonen-Strasse**
**D-5170 Jülich(DE)**

(72) Erfinder: **Gierkens, Heinrich**
**Römerweg 16**
**D-5112 Baesweiler(DE)**

(54) **Vorrichtung zur Entnahme von Flüssigkeitsproben.**

(57) Die Erfindung bezieht sich auf eine Vorrichtung zur Entnahme von Flüssigkeitsproben aus Kanälen oder Gewässern. Mittels eines Antriebsmotors wird eine Schöpfkammer um eine drehbare Achse geschwenkt. Die Schöpfkammer taucht dabei in die zu untersuchende Flüssigkeit ein und gibt beim weiteren Schwenkverlauf die aufgenommene Flüssigkeitsmenge an ein Sammelgefäß ab. Ziel der Erfindung ist eine einfache, störunanfällige Vorrichtung, die auch in der Flüssigkeit enthaltene Feststoffe problemlos sammelt. Hierzu besteht die drehbare Achse aus einem Schenkel eines gewinkelten Rohres, dessen anderer Schenkel einen Schwenkarm bildet, an dem sich die Schöpfkammer, die eine Verbindung zum Rohrinneren hat, befindet. Die vom Schöpfarm aufgenommene Flüssigkeit gelangt so durch das Rohr in die drehbare Achse und aus darin vorgesehenen Austrittsöffnungen in das unterhalb der Achse befindliche Sammelgefäß.

FIG. 1

EP 0 353 747 A2

## Vorrichtung zur Entnahme von Flüssigkeitsproben

Die Erfindung bezieht sich auf eine Vorrichtung zur Entnahme von Flüssigkeitsproben aus Kanälen oder Gewässern.

Es ist bekannt, zur Entnahme von Wasserproben aus Kanälen und Gewässern elektronisch gesteuerte peristaltische Pumpen einzusetzen, darunter auch solche mit regelbarer Pumpfrequenz und Anschluß für mengenproportionale Probenentnahme. Nachteilig ist beim Einsatz derartiger Pumpen jedoch, daß je nach der Beschaffenheit der zu entnehmenden Flüssigkeiten Flüssigkeitsschwebestoffe, insbesondere Sand, vor der Pumpe ausgefiltert werden müssen, um Störungen der Schlauchpumpen weitgehend zu vermeiden. Hinzuzufügen ist, daß die Feststoffe für die Bestimmung des Gewässerzustandes von Bedeutung sein können. Weiterhin ist bei den bekannten Probenentnahmen ggf. von Nachteil, daß die Probe nur an einem Punkt - über die Öffnung des die Flüssigkeit aufnehmenden Schlauches - entnommen wird.

Es ist daher Aufgabe der Erfindung, eine Vorrichtung der eingangs bezeichneten Art zu schaffen, die einfach ist, störunanfällig arbeitet, in der Flüssigkeit enthaltene Feststoffe problemlos sammelt und einen erweiterten Flüssigkeitsquerschnitt - in dem zu untersuchenden Gewässer - zu überstreichen gestattet.

Diese Aufgabe wird erfindungsgemäß durch eine Vorrichtung mit den in Anspruch 1 angegebenen kennzeichnenden Merkmalen gelöst. Beim Einsatz der Vorrichtung gemäß der Erfindung taucht die Schöpfkammer bei jeder Umdrehung in die zu untersuchende Flüssigkeit ein, von der sie eine bestimmte Probenmenge dabei entnimmt.

Mit der Vorrichtung gemäß der Erfindung werden Flüssigkeitsproben mit und ohne Schwebe- und Feststoffe problemlos entnommen. Die insgesamt entnommene Probenmenge, beispielsweise etwa 1 l pro Stunde, wird dabei durch die einzelnen Probenmengen und die Häufigkeit der Probenentnahme, d.h. durch die Zahl der Umdrehungen bestimmt. Durch die Länge des abgewinkelten Schenkels wird zudem die Strecke, die die Schöpfkammer in der Flüssigkeit durchläuft, bestimmt.

Bei einer sehr zweckmäßigen Ausführungsform der Vorrichtung gemäß der Erfindung besteht die Schöpfkammer aus einem am Schwenkarm seitlich angebrachten rohrförmigen Teil mit einer Öffnung an dem dem Schwenkarm abgewandten Ende, wobei das Ende des rohrförmigen Teils derart geformt ist, daß die Öffnung bei tiefster Stellung des Schwenkarmes nach oben weist. Beim Eintauchvorgang nimmt die Schöpfkammer Flüssigkeit auf und gibt diese an ein entsprechend angeordnetes Sammelgefäß ab, sobald sie beim Schwenkvorgang nach oben gelangt ist und die Öffnung der Schwenkkammer nach unten weist.

Eine weitere Ausführungsform der Vorrichtung gemäß der Erfindung besteht darin, daß drehbares Teilstück und Schwenkarm aus einem gewinkelten Rohr bestehen, wobei der eine Schenkel des Rohres um die eigene Achse drehbar ist und eine oder mehrere oberhalb eines Sammelgefäßes befindliche Austrittsöffnungen aufweist und wobei das äußere Ende des schwenkbaren, rohrförmigen Schenkels mit der Schöpfkammer verbunden ist oder diese bildet. Bei dieser Ausführungsform fließt die von der Schöpfkammer aufgenommene Flüssigkeit im Verlauf des Schwenkvorganges durch das Rohr zur Austrittsöffnung und wird unterhalb dieser vom Sammelgefäß aufgenommen.

Dabei kann es zweckmäßig sein, daß die Eintrittsöffnung in der Schöpfkammer bzw. dem rohrförmigen, schwenkbaren Schenkel so bemessen ist, daß während der Eintauchphase nur die vorbestimmte Probenmenge an Flüssigkeit aufgenommen wird.

Die Vorrichtung gemäß der Erfindung ist in der Zeichnung schematisch dargestellt und wird im folgenden näher erläutert:

Es zeigen:

Figur 1 die Seitenansicht einer Ausführungsform der Vorrichtung;

Figur 2 eine Seitenansicht der Schöpfkammer gemäß Figur 1.

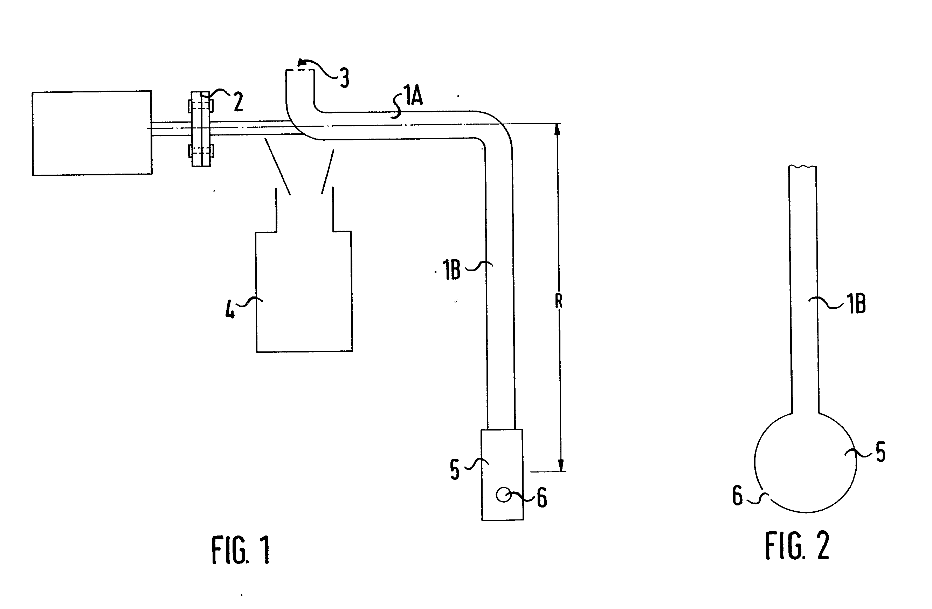

Bei der in Figur 1 dargestellten Ausführungsform bestehen drehbares Teilstück und schwenkbarer Schenkel aus einem Rohr, dessen einer Schenkel 1A über einen Flansch 2 mit der Achse des Zwischengetriebes eines Antriebs verbunden und so in horizontaler Lage drehbar ist. Die Austrittsöffnungen 3 im Rohr sind oberhalb eines Sammelgefäßes 4 angeordnet. Der abgewinkelte Schenkel 18 mit der Länge R endet in einer zylinderförmigen Schöpfkammer 5.

Figur 2 zeigt die Seitenansicht der Schöpfkammer 5. Bei genügend größer Eintrittsöffnung 6 wird - je nach dem, ob die Öffnung auf der der Schwenkrichtung zu- oder abgewandten Seite angebracht ist -eine unterschiedliche Probenmenge von der Schöpfkammer entnommen. Dabei wird im Verlauf der Schwenkbewegung nach oben zunächst beim Tauchvorgang in die Schöpfkammer eingetretene überschüssige Flüssigkeit aus der Öffnung wieder ausfließen. Selbstverständlich kann auch eine andere Position der Öffnung zur Einstellung einer anderen Probenmenge gewählt werden. Auch kann die Öffnung so gewählt werden, daß während der Eintauchphase nur die vorbestimmte Probenmenge an Flüssigkeit aufgenommen wird.

**Ansprüche**

1. Vorrichtung zur Entnahme von Flüssigkeitsproben aus Kanälen oder Gewässern mit mittels eines Antriebsmotors um die eigene Achse drehbarem Teilstück und daran befestigter Schöpfkammer, die beim Eintauchen in die zu untersuchende Flüssigkeit eine bestimmte Flüssigkeitsmenge aufnimmt und diese beim weiteren Schwenkverlauf oberhalb des Flüssigkeitsspiegels an ein Sammelgefäß abgibt,
**dadurch gekennzeichnet,**
daß das drehbare Teilstück (1a) aus dem einen Schenkel eines gewinkelten Rohres besteht, dessen anderer Schenkel einen Schwenkarm (1b) bildet, an dem sich die Schöpfkammer (5) befindet, wobei der das drehbare Teilstück bildende Schenkel eine oder mehrere, oberhalb des Sammelgefäßes (4) befindliche Austrittsöffnungen (3) aufweist und wobei die Schöpfkammer mit dem Inneren des Rohres in Verbindung steht.

2. Vorrichtung nach Anspruch 1,
**dadurch gekennzeichnet,**
daß das äußere Ende des den Schwenkarm bildenden Schenkels (1b) die Schöpfkammer (5) bildet.

3. Vorrichtung nach Anspruch 1 oder 2,
**dadurch gekennzeichnet,**
daß die Eintrittsöffnung (6) in der Schöpfkammer (5) bzw. in dem rohrförmigen, schwenkbaren Schenkel so bemessen ist, daß während der Eintauchphase eine vorbestimmte Probenmenge an Flüssigkeit aufgenommen wird.

4. Vorrichtung nach Anspruch 3,
**dadurch gekennzeichnet,**
daß die Eintrittsöffnung (6) in der Schöpfkammer (5) bzw. in dem rohrförmigen, schwenkbaren Schenkel so bemessen ist, daß während der Eintauchphase eine vorbestimmte Probenmenge an Flüssigkeit aufgenommen wird.

FIG. 2

FIG. 1